# EUROPÄISCHE PATENTSCHRIFT

(11) **EP 3 842 175 B1**
(45) Veröffentlichungstag und Bekanntmachung des Hinweises auf die Patenterteilung: **21.02.2024**
(21) Anmeldenummer: 20197130.6
(22) Anmeldetag: 21.09.2020
(51) Int. Cl.: B23K 26/08, B23K 26/38, B23K 26/40, B23K 26/70, B23K 37/04, B23K 101/18, B23K 103/04

(54) **SPANNPRATZE, BEARBEITUNGSMASCHINE UND VERFAHREN ZUR REINIGUNG VON EINER SPANNPRATZE**
CLAMPING CLAW, PROCESSING MACHINE AND METHOD FOR CLEANING A CLAMPING CLAW
GRIFFE DE SERRAGE, MACHINE D'USINAGE ET PROCÉDÉ DE NETTOYAGE D'UNE GRIFFE DE SERRAGE

(30) Priorität: 28.10.2019 DE 102019128969
(43) Veröffentlichungstag der Anmeldung: 30.06.2021
(73) Patentinhaber: TRUMPF Werkzeugmaschinen SE + Co. KG, 71254 Ditzingen (DE)
(72) Erfinder: HACKEMANN, Matthias, 75045 Walzbachtal (DE)
(74) Vertreter: Mammel und Maser Patentanwälte PartG mbB

(56) Entgegenhaltungen:
- EP-A1- 1 691 165
- EP-A1- 2 465 637
- EP-B1- 2 465 637
- WO-A1-2009/065429
- DE-A1- 4 021 546

## Beschreibung

Die Erfindung betrifft eine Spannpratze, eine Bearbeitungsmaschine zum Bearbeiten von plattenförmigen Werkstücken sowie ein Verfahren zur Reinigung von einer Spannpratze.

Aus der DE 10 2018 121 968 A1 sowie der WO 2009/065429 A1 ist eine Bearbeitungsmaschine zum Bearbeiten von plattenförmigen Werkstücken bekannt. Diese Bearbeitungsmaschine umfasst eine Werkstückauflage mit einer ersten und zweiten Werkstückauflagefläche, zwischen denen eine Strahlauffangvorrichtung vorgesehen ist. Oberhalb einer Öffnung der Strahlauffangvorrichtung ist ein Laserschneidkopf einer Laserbearbeitungsmaschine zum Bearbeiten der plattenförmigen Werkstücke verfahrbar. Zum Verfahren und Positionieren des plattenförmigen Werkstücks auf der Werkstückauflage ist eine Halteeinrichtung mit mehreren Spannpratzen vorgesehen, die das zumindest eine Werkstück greifen.

Solche Spannpratzen sind beispielsweise aus der DE 10 2010 063 541 A1 bekannt und umfassen ein Tastelement, um die Positionierung des Werkstückes zur jeweiligen Spannpratze vor dem Spannen durch die Spannpratzen zu erfassen. Aufgrund von Verunreinigungen, beispielsweise durch Verschmutzungen, Staub, Schlacke, die während der Laserbearbeitung entstehen, kann ein Festsetzen des Tastelementes in der Spannpratze erfolgen, wodurch die Erfassung der Position des Werkstücks in der Spannpratze nicht mehr möglich ist.

Aus der DE 10 2009 005 543 A1 ist eine Spannvorrichtung bekannt, welche über einen Druckzylinder einen Spannarm betätigt, um ein Werkstück zu klemmen. In einem Gehäuse ist ein Antriebskraftübertragungs-Mechanismus vorgesehen, der eine Spannbewegung durch den Druckzylinder auf den Spannarm überträgt. In dem Gehäuse, welches den Antriebskraftübertragungs-Mechanismus umschließt, ist eine Ablassöffnung vorgesehen, die mit einer Durchgangsbohrung des Gehäuses in Verbindung steht. Durch die Ablassöffnung können Fremdstoffe, die in das Gehäuse eintreten, nach außen abgeführt werden, und zwar in entgegengesetzter Richtung zum Spannarm.

Aus der DE 40 21 546 A1 ist eine Messeinrichtung zur berührungslosen Lage- bzw. Längenmessung an Werkstücken bekannt. Hierzu weist ein Messkopf eine zentrale Bohrung auf, durch welche ein Fluidstrom austreten kann und eine Reinigung der zu Messzwecken benutzten Oberfläche des Werkstücks ermöglicht.

Aus der EP 1 691 165 A1 ist eine Vorrichtung zur Überprüfung von Maß-, Druck- und Lagetoleranzen eines Werkstückes bekannt. Innerhalb eines Gehäuses ist ein auf- und abbewegbarer Taststift vorgesehen. In das Gehäuse ist eine Druckluft zuführbar, so dass der Taststift gegen die Kraft einer Feder in eine Ausgangsposition zurückgestellt wird. Gleichzeitig kann aufgrund des aufgebrachten Innendrucks im Gehäuse erzielt werden, dass keine Verunreinigungen, wie beispielsweise Flüssigkeiten in den Innenraum des Tasters eindringen können.

Der Erfindung liegt die Aufgabe zugrunde, eine Spannpratze zur Fixierung eines plattenförmigen Materials sowie eine Bearbeitungsmaschine mit einer solchen Spannpratze als auch ein Verfahren zur Reinigung von einer Spannpratze zur Fixierung eines plattenförmigen Werkstücks vorzuschlagen, durch welches eine dauerhafte Funktionstüchtigkeit ermöglicht wird.

Diese Aufgabe wird durch eine Spannpratze zur Fixierung eines plattenförmigen Werkstücks, insbesondere eines Blechs, für eine Bearbeitungsmaschine, gelöst, bei der eine Reinigungseinrichtung vorgesehen ist, welche auf das Tastelement einwirkt und eine Verfahrbewegung des Tastelements zumindest in eine Ausgangsposition zur Spannpratze freisetzt. Diese Reinigungseinrichtung ermöglicht, dass ein Festsetzen des Tastelementes an oder innerhalb des Pratzenunterteils durch Schmauch, Abbrand, Staub oder Schlackespritzer verhindert oder wieder gelöst wird und das Tastelement in eine Ausgangsposition zur Aufnahme eines plattenförmigen Werkstücks positioniert wird. Dies ermöglicht für jedes erneute Spannen des plattenförmigen Werkstücks durch die Spannpratze gleiche Arbeitsbedingungen. Das Tastelement ist in einer Ausgangsposition positioniert und kann das Zuführen bzw. Positionieren des plattenförmigen Werkstückes zwischen dem Pratzenoberteil und dem Pratzenunterteil erfassen. Dadurch ist eine Prozessüberwachung ermöglicht. Ein Spannvorgang der Spannpratzen wird erst nach dem Erfassen einer vorbestimmten Position des Werkstücks zur Spannpratze zum Klemmen des Werkstücks angesteuert.

Bevorzugt ist vorgesehen, dass die Reinigungsvorrichtung zumindest einen Fluidstrahl im Pratzenteil ausgibt, der auf das Tastelement zum Überführen in die Ausgangsposition ausgerichtet ist. Dadurch kann eine erhöhte Kraftwirkung erzielt werden, um das Tastelement aus einer teilweise oder vollständig in das Pratzenunterteil eingefahrenen Position zu lösen und in die Ausgangsposition überzuführen. Darüber hinaus kann eine gute Abreinigung von Verunreinigungen ermöglicht sein.

Bevorzugt ist vorgesehen, dass die Reinigungseinrichtung einen Druckerzeuger umfasst, der an eine Fluidversorgung der Bearbeitungsmaschine oder an eine externe Druckversorgung anschließbar ist. Durch den Druckerzeuger kann der zumindest eine Fluidstrahl mit einem erhöhten Druck beaufschlagt werden, um ein Lösen und/oder Abblasen von Verunreinigungen von oder an dem Tastelement zu ermöglichen.

Die Reinigungseinrichtung ist bevorzugt mit einer Steuerung der Bearbeitungsmaschine ansteuerbar. Insbesondere wird der Druckerzeuger zur Ausgabe von Druckstößen angesteuert. Durch diese Druckstöße kann bei stärker anhaftenden Verunreinigungen ein Abplatzeffekt erzielt werden, um ein verbessertes Lösen der Verunreinigungen zu erzielen.

Das Tastelement ist gemäß einer bevorzugten Ausgestaltung in einer Ausgangsposition gegenüber einer Stirnfläche der Pratzenunterseite hervorstehend positioniert und in einer Erfassungsposition zumindest teilweise, vorzugsweise vollständig, in einem an der Stirnfläche angrenzenden und in dem Pratzenunterteil vorgesehenen Aufnahmeraum positioniert, wobei der zumindest eine Fluidstrahl in den Aufnahmeraum strömt. Nach einmaligem oder mehrmaligem Erfassen der Position des aufzunehmenden plattenförmigen Werkstückes, bei dem das Tastelement zwischen der Ausgangsposition und der Erfassungsposition verfahren wird, kann sich zwischen dem Tastelement und dem Aufnahmeraum Schmutz absetzen. Dies kann zu einem Verklemmen oder Festsetzen des Tastelements in dem Aufnahmeraum des Pratzenunterteils führen. Durch das bevorzugte Zuführen des Fluidstrahls in den Aufnahmeraum kann das Ausfahren des Tastelementes aus dem Aufnahmeraum unterstützt oder bewirkt werden und ein umlaufender Spalt zwischen dem Tastelement und dem Aufnahmeraum kann beim Ausströmen des zugeführten Fluidstrahls die Verunreinigungen nach außen abblasen.

Vorteilhafterweise ist vorgesehen, dass das Tastelement und ein Sensorelement der Sensorrichtung durch eine Schubstange gekoppelt sind, wobei die Schubstange sich in einem Führungsabschnitt in dem Pratzenunterteil zwischen einem Sensorraum und dem Aufnahmeraum des Tast-elementes erstreckt. Vorzugsweise ist im Führungsabschnitt ein Rückstellelement vorgesehen, durch welches das Tastelement in die Ausgangsposition überführbar ist. Dies ermöglicht eine kompakte Anordnung des Tastelements in dem Pratzenunterteil, so dass einerseits ein selbständiges Überführen des Tastelements in die Ausgangsposition und andererseits in einem Sensorraum eine gesicherte Positionserkennung des Sensorelementes ermöglicht ist.

Des Weiteren ist bevorzugt vorgesehen, dass das Tastelement eine längliche Tastfläche, insbesondere eine länglich-rechteckförmige oder eine länglich-ovale Geometrie einer Tastfläche, aufweist und in einer korrespondierenden Aufnahme positioniert ist. Das Tastelement erstreckt sich in der Länge in vertikaler Richtung in der Stirnfläche des Pratzenunterteils. Diese vertikale Ausrichtung des Tastelements weist den Vorteil auf, dass sowohl bei einer manuellen Bestückung als auch einer maschinellen Bestückung der Spannpratze mit dem plattenförmigen Material eine Erkennung der Positionierung des plattenförmigen Materials zwischen dem Pratzenoberteil und Pratzenunterteil ermöglicht ist. Es kann eine teilweise, aber auch eine vollständige Positionierung eines Randbereiches zwischen dem Pratzenoberteil und dem Pratzenunterteil erfasst werden, sobald das Werkstück zwischen dem Pratzenunterteil und Pratzenoberteil positioniert ist. Zudem kann durch diese längliche, in vertikaler Richtung ausgerichtete Tastfläche ermöglicht werden, dass der seitlich benachbarte Totbereich für eine mögliche Bearbeitung des plattenförmigen Werkstücks verringert wird.

Des Weiteren ist bevorzugt vorgesehen, dass das Tastelement rückseitig zur Tastfläche eine erste Druckfläche und eine zweite Druckfläche an einer weiteren Zylinderfläche des Tastelements in dem Führungsabschnitt zur Aufnahme der Schubstange aufweist. Somit kann durch die Reinigungseinrichtung eine Zuführung von zumindest einem Fluidstrahl auf die erste und zweite Druckfläche des Tastelementes erfolgen, wodurch eine erhöhte Druckkraft zum Überführen des Tastelementes in die Ausgangsposition und somit eine verbesserte Reinigung ermöglicht ist.

Der Aufnahmeraum für das Tastelement ist zur Stirnseite des Pratzenunterteils offen ausgebildet und in Richtung auf den Sensorraum, in welchem sich die Schubstange erstreckt, durch ein Lager und/oder eine Dichtung im Führungsabschnitt abgedichtet ausgebildet. Somit kann durch die Zuführung des zumindest einen Fluidstrahls in den Führungsabschnitt und/oder in den Aufnahmeraum eine Kraft durch die Ausblasrichtung des zumindest einen Fluidstrahls nur in die Ausfahrrichtung des Tastelementes zum Überführen in die Ausgangsposition wirken.

Des Weiteren ist bevorzugt vorgesehen, dass ein zweiter Fluidstrahl auf die Zylinderfläche im Führungsabschnitt des Tastelementes und ein erster Fluidstrahl auf die Druckfläche des Tastelementes wirkt, die der Tastfläche gegenüberliegt. Vorteilhafterweise kann das Volumen des ersten und zweiten Fluidstrahls gleich oder voneinander abweichend einstellbar sein.

Des Weiteren ist bevorzugt vorgesehen, dass die Reinigungsvorrichtung an dem Pratzenunterteil einen Fluidanschluss aufweist, welcher über zumindest eine Verbindungsleitung in den Führungsabschnitt und/oder Aufnahmeraum mündet. Der Fluidanschluss wird mit einer zum Druckerzeuger führenden Schlauchleitung versorgt. Dadurch kann eine kompakte Bauweise ermöglicht sein, ohne dass durch diese zusätzliche Reinigungseinrichtung die bisherige Funktion solcher Spannpratzen beeinträchtigt ist.

Die der Erfindung zugrundeliegende Aufgabe wird des Weiteren durch eine Bearbeitungsmaschine zum Bearbeiten von plattenförmigen Werkstücken gelöst, bei denen Spannpratzen der Halteeinrichtung nach einer der vorher beschriebenen Ausführungsformen vorgesehen sind. Eine solche Bearbeitungsmaschine umfasst eine Werkstückauflage mit einer ersten und zweiten Werkstückauflagefläche, zwischen denen eine Strahlauffangvorrichtung vorgesehen ist. Oberhalb einer Öffnung der Strahlauffangvorrichtung ist ein Laserschneidkopf einer Laserbearbeitungseinrichtung verfahrbar vorgesehen. Durch eine Halteeinrichtung mit mehreren Spannpratzen wird das zumindest eine Werkstück gegriffen und ist relativ zur ersten und zweiten Werkstückauflagefläche verfahrbar. Durch diese Reinigungseinrichtung an den jeweiligen Spannpratzen ist ermöglicht, dass nach jedem Greifvorgang in zeitlichen Abständen die Verschmutzungen entfernt werden können. Solche Verunreinigungen wie Schmauch, Abbrand, Staub und/oder Schlackespritzer entstehen während der Laserbearbeitung des plattenförmigen Materials.

Bevorzugt ist vorgesehen, dass die Bearbeitungsmaschine einen Druckerzeuger umfasst, der an eine Fluidversorgung der Bearbeitungsmaschine oder an eine externe Druckversorgung anschließbar ist. Durch einen solchen Druckerzeuger kann über zumindest eine Schlauchleitung der zumindest eine Fluidstrahl der Reinigungseinrichtung an dem Pratzenunterteil zugeführt werden. Vorteilhafterweise können durch den Druckerzeuger Druckstöße erzeugt werden, um den Löseeffekt der Verunreinigungen zu erhöhen.

Die der Erfindung zugrundeliegende Aufgabe wird des Weiteren durch ein Verfahren zur Reinigung von einer Spannpratze gelöst, welche zur Fixierung eines plattenförmigen Materials in einer Bearbeitungsmaschine vorgesehen ist, wobei eine Reinigungseinrichtung betätigt wird, welche auf das Tastelement einwirkt und durch welche eine Verfahrbewegung des Tastelementes zumindest in die Ausgangsposition freigesetzt wird. Durch diese Reinigungseinrichtung kann ein Festsetzen des Tastelementes in einer Position zum Pratzenunterteil abweichend von der Ausgangsposition wieder gelöst werden. Gleichzeitig können Verunreinigungen von dem Tastelement entfernt werden.

Bevorzugt ist vorgesehen, dass das Tastelement durch die Reinigungseinrichtung mit zumindest einem Fluidstrahl beaufschlagt wird. Durch die Reinigungseinrichtung kann die Ausgabe des zumindest einen Fluidstrahls nach jedem Erfassen und Klemmen des Werkstücks angesteuert werden oder erst nach mehrmaligem Erfassen und Klemmen des Werkstücks. Dieser zumindest eine Fluidstrahl wird bevorzugt dem Pratzenunterteil zugeführt und der zumindest eine Fluidstrahl wird insbesondere auf das Tastelement, also eine Rückseite des Tastelements, ausgerichtet. Beim Beaufschlagen des Tastelementes mit dem zumindest einen Fluidstrahl wird dieses in die Ausgangsposition zum Pratzenunterteil übergeführt. Zum einen wird bei der Betätigung der Reinigungseinrichtung das Tastelement gegenüber dem Pratzenunterteil ausgefahren und in die Ausgangsposition übergeführt und zum anderen können gleichzeitig Verunreinigungen zwischen dem Tastelement und dem Pratzenunterteil nach außen aus- und/oder abgeblasen werden. Dadurch wird die volle Funktionsfähigkeit gewährt.

Des Weiteren ist bevorzugt vorgesehen, dass die Reinigungseinrichtung einen Druckerzeuger umfasst, der an eine Fluidversorgung oder an eine externe Druckversorgung angeschlossen wird. Dadurch wird ermöglicht, dass ein Medium zum Beaufschlagen mittels eines Drucks und zum Zuführen der Reinigungseinrichtung zur Verfügung steht und bedarfsmäßig ausgegeben werden kann.

Des Weiteren ist bevorzugt vorgesehen, dass der Druckerzeuger zur Ausgabe von Druckstößen mit einer Steuerung der Bearbeitungsmaschine angesteuert wird. Durch diese Druckstöße, die sich in dem Fluidstrahl in Form von Druckwellen bis zum Tastelement fortpflanzen, kann ein höherer Reinigungseffekt und ein verbessertes Ablösen der Verunreinigungen erzielt werden.

Vorteilhafterweise wird der zumindest eine Fluidstrahl in einem vorzugsweise vorbestimmten Zeitintervall mit mehreren Druckstößen beaufschlagt. Für einen Reinigungsprozess können ein oder mehrere Zeitintervalle aufeinanderfolgend angesteuert werden. Die aufeinanderfolgenden Zeitintervalle können in der Zeitdauer und/oder Anzahl der Druckstöße gleich oder auch voneinander abweichend sein. Dadurch kann der Löse-effekt des Tastelementes in einer ggf. festsitzenden oder verklemmten Erfassungsposition im Pratzenunterteil erhöht werden, so dass das Tastelement gegenüber dem Pratzenunterteil wieder in eine Ausgangsposition übergeführt wird.

Vorteilhafterweise wird der zumindest eine Fluidstrahl einem Aufnahmeraum in dem Pratzenunterteil zugeführt, so dass bei einer Druckbeaufschlagung des Aufnahmeraums das Tastelement in die Ausgangsposition ausgefahren wird. Durch einfache bauliche Maßnahmen kann eine gezielte Verfahrbewegung des Tastelementes durch die Druckbeaufschlagung von zumindest einem Fluidstrahl erzielt werden.

Durch die Zuführung des zumindest einen Fluidstrahles über die Reinigungseinrichtung können darüber hinaus zwischen dem Tastelement und dem Aufnahmeraum sich befindliche Verunreinigungen aus dem dazwischen gebildeten Spalt herausgeführt werden. Somit kann gleichzeitig auch sichergestellt sein, dass sich in dem Aufnahmeraum selbst keine Verunreinigungen ansammeln und eine Art Luftvorhang in dem Spalt zwischen dem Aufnahmeraum und dem Tastelement gebildet werden kann, um ein Eintreten von Verunreinigungen zu verhindern.

Vorteilhafterweise ist vorgesehen, dass der zumindest eine Fluidstrahl als Gasströmung oder Druckluftströmung ausgegeben wird, so dass dieser Fluidstrahl ohne weitere Vorkehrungen oder eine Absaugung in den Maschinenraum der Bearbeitungsmaschine ausströmen kann.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine perspektivische Ansicht einer Bearbeitungsmaschine zum Bearbeiten von plattenförmigen Werkstücken,
Figur 2 eine perspektivische Ansicht einer Spannpratze einer Halteeinrichtung der Bearbeitungsmaschine gemäß Figur 1, in einer geöffneten Position,
Figur 3 eine perspektivische Ansicht der Spannpratze gemäß Figur 2 in einer geschlossenen Position,
Figur 4 eine schematische Schnittansicht der Spannpratze gemäß Figur 3, und
Figur 5 eine perspektivische Ansicht eines Teilschnitts der Spannpratze gemäß Figur 1 mit einer Reinigungseinrichtung.

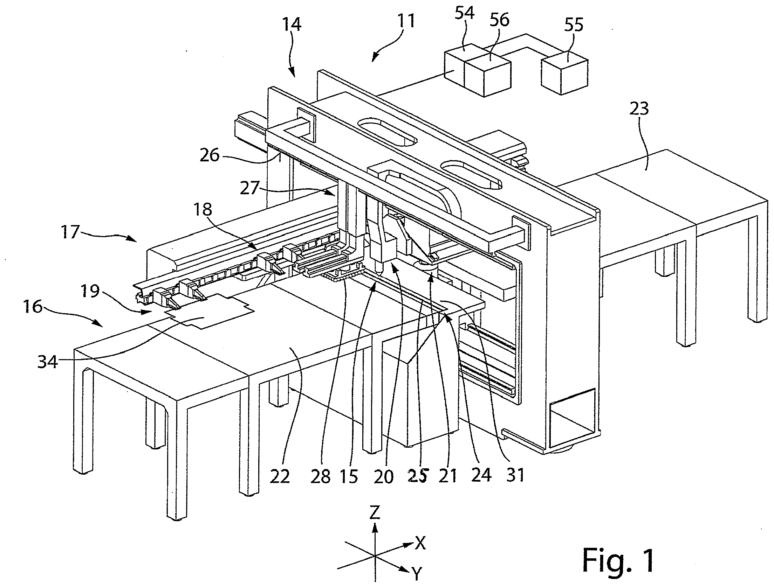

In Figur 1 ist perspektivisch eine Bearbeitungsmaschine 11 dargestellt. Diese Bearbeitungsmaschine 11 ist beispielsweise eine Hybridbearbeitungsmaschine. Diese Hybridbearbeitungsmaschine 11 ermöglicht sowohl eine Laserbearbeitung als auch eine Stanzbearbeitung von plattenförmigen Werkstücken. Alternativ kann die Bearbeitungsmaschine 11 auch nur eine Laserschneidbearbeitungsmaschine sein. Diese Bearbeitungsmaschine 11 weist einen geschlossenen Grundkörper 14, insbesondere einen umlaufenden Rahmen 14, auf, der sich vorzugsweise in Y-Richtung erstreckt. Diesen Rahmen 14 durchquert eine Werkstückauflage 16, welche sich in X-Richtung erstreckt. Der Werkstückauflage 16 ist eine Halteeinrichtung 17 zugeordnet, welche Halteelemente 18, 19 aufweist. Vorzugsweise sind die Halteelemente 18, 19 als Klammern oder Klemmen ausgebildet. Durch diese Halteelemente 18, 19 kann ein zugeschnittenes Werkstück 34, das vorzugsweise als ein plattenförmiges Werkstück ausgebildet ist, gehalten und beispielsweise in X-Richtung der Werkstückebene (X/Y-Ebene) verfahren werden. Zur Bearbeitung eines plattenförmigen Werkstücks 34 kann ein Laserbearbeitungskopf 20 und/oder ein Stanzbearbeitungskopf 21 entlang der Y-Achse innerhalb des Rahmens 14 verfahrbar angesteuert werden. Hierzu sind für den Laserbearbeitungskopf 20 und den Stanzbearbeitungskopf 21 jeweils unabhängig voneinander ansteuerbare und nicht näher dargestellte Linearantriebe vorgesehen.

Die Bearbeitungsmaschine 11 mit einem Laserbearbeitungskopf 20 weist eine Strahlauffangvorrichtung 24 auf, welche sich in Y-Richtung erstreckt und unterhalb der Verfahrachse des Laserbearbeitungskopfes 20 vorgesehen ist.

Sofern die Bearbeitungsmaschine 11 einen Stanzbearbeitungskopf 21 aufweist, ist unterhalb der Werkstückauflage 16 ein Unterwerkzeug, insbesondere eine Stanzmatrize, vorgesehen, welche vorzugsweise entsprechend dem Stanzbearbeitungskopf 21, vorzugsweise in Y-Richtung, verfahrbar ist.

Die Bearbeitungsmaschine 11 kann an einer Stirnseite des Rahmens 14 eine Handlingseinrichtung 26 aufweisen. Diese ist beispielsweise am Rahmen 14 befestigt. Diese Handlingseinrichtung 26 umfasst eine Tragstruktur 27, welche zumindest eine Greifeinrichtung 28 aufnimmt. Durch diese Handlingseinrichtung 26 ist zumindest eine Greifeinrichtung 28 oberhalb der Werkstückauflage 16 verfahrbar vorgesehen, um das Werkstück 34, insbesondere ein plattenförmiges Rohmaterial und/oder den Zuschnitt 34, der Bearbeitungsmaschine 11 zuzuführen und auf der Werkstückauflage 16 aufzulegen.

Die Handlingseinrichtung 26 ermöglicht des Weiteren, bearbeitete Werkstücke aufzunehmen und von der Werkstückauflage 16 zu entnehmen und aus der Bearbeitungsmaschine 11 herauszuführen und diese in einem Magazin, einem Stapel oder Behälter abzulegen.

Die Werkstückauflage 16 weist einen ersten Werkstückauflageabschnitt 22 und einen zweiten Werkstückauflageabschnitt 23 auf, die sich vor und hinter dem Rahmen 14 erstrecken. Zwischen dem ersten und zweiten Werkstückauflageabschnitt 22, 23 ist die Strahlauffangvorrichtung 24 vorgesehen. Diese Strahlauffangvorrichtung 24 erstreckt sich bevorzugt quer zur Transportrichtung der Werkstücke 34. Die Strahlauffangvorrichtung 24 ist in Y-Richtung ausgebildet und erstreckt sich vorteilhafterweise über den gesamten Verfahrbereich des Laserschneidkopfes 20. Die Strahlauffangvorrichtung 24 weist eine Öffnung 25 auf, sodass ein bei der Bearbeitung des Werkstückes 34 unten austretender Laserstrahl durch die Öffnung 25 hindurch in die Strahlauffangvorrichtung 24 hineintritt.

Bei der in Figur 1 dargestellten Ausführungsform ist die Handlingseinrichtung 26 mittels einer Tragstruktur 27 am Rahmen 14 gehalten. Alternativ kann diese Handlingseinrichtung 26 separat zum Rahmen positioniert und zur Werkstückauflage 16 ausgerichtet sein.

Bei dem zu bearbeitenden Werkstück 34 handelt es sich beispielsweise um ein Werkstückteil, welches aus einem plattenförmigen Material, insbesondere aus einem Rohblech, hergestellt ist. Dieses Werkstück 34 kann dafür vorgesehen sein, um daraus Kleinstteile herzustellen. Dabei können diese Kleinstteile innerhalb des Werkstücks 34 eingebracht werden und beispielsweise durch einen Mikrojoint in einem sich dann ergebenden Restgitter oder Restwerkstück gehalten werden. Auch können vom Werkstückteil 34 unmittelbar Kleinstteile geschnitten werden.

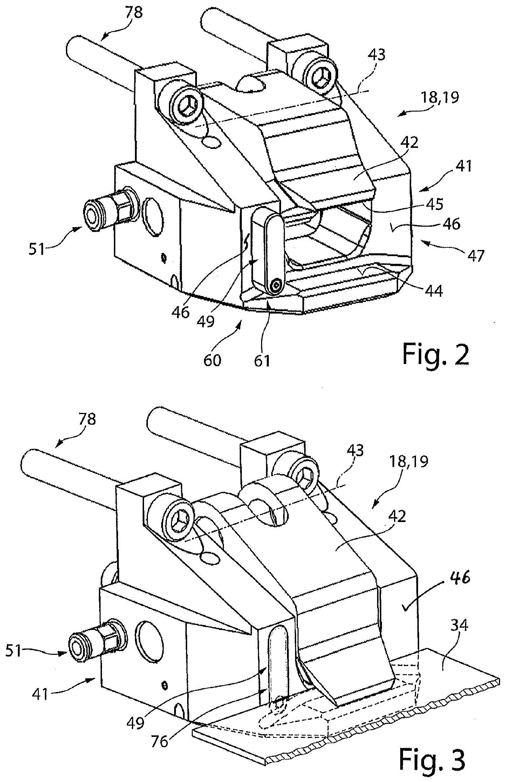

In Figur 2 ist schematisch vergrößert die Spannpratze 18, 19 in einer geöffneten Position dargestellt. Bevorzugt sind die Spannpratzen 18, 19 gleich ausgebildet. Diese Spannpratzen 18, 19 umfassen ein Pratzenunterteil 41 sowie ein Pratzenoberteil 42. Im Ausführungsbeispiel ist das Pratzenoberteil 42 bewegbar zum Pratzenunterteil 41 ausgebildet. Vorteilhafterweise kann das Pratzenoberteil 42 um eine Schwenkachse 43 auf das Pratzenunterteil 41 zubewegt werden. Alternativ kann auch eine Vertauschung vorgesehen sein. Des Weiteren kann alternativ vorgesehen sein, dass sowohl das Pratzenunterteil 41 als auch das Pratzenoberteil 42 für eine Klemmung des plattenförmigen Werkstücks 34 aufeinander zu bewegbar sind.

Das Pratzenunterteil 41 umfasst eine Abstützfläche 44 bzw. eine Zunge, welche unterhalb eines Randbereichs des Werkstücks 34 positioniert wird. Zur Abstützfläche 44 ist eine Stirnfläche 46 ausgerichtet, die vorzugsweise senkrecht dazu vorgesehen ist. Eine Stirnseite des Werkstücks 34 kann, um darauffolgend das Werkstück 34 sicher zu greifen, zur Anlage an der Stirnfläche 46 gebracht werden. Im Ausführungsbeispiel weist das Pratzenunterteil 41 ein U-förmiges Gehäuse 47 auf. Zwischen zwei parallel zueinander ausgerichteten Schenkeln des U-förmigen Gehäuses 47 ist das Pratzenoberteil 42 positioniert. Jeweils an der Stirnseite der Schenkel des U-förmigen Gehäuses 47 ist die Stirnfläche 46 vorgesehen. In zumindest einer der beiden Stirnflächen 46 ist ein Tast-element 49 vorgesehen. Durch das Tastelement 49 kann das Vorhandensein oder Nichtvorhandensein eines plattenförmigen Werkstückes 34 oder auch ein nur teilweises Positionieren des plattenförmigen Werkstücks 34 zwischen dem Pratzenoberteil 42 und dem Pratzenunterteil 41 detektiert werden.

Das Tastelement 49 ist von dem Pratzenunterteil 41 aufgenommen und in einer Ausgangsposition 61 angeordnet. In dieser Ausgangsposition 61 ragt das Tastelement 49 in einen zwischen der Abstützfläche 44 des Pratzenunterteils 41 und der Spannfläche 45 des Pratzenoberteils 42 gebildeten Greif- oder Spannbereich. Dieser ist in Z-Richtung durch die Spannfläche 45 des Pratzenoberteils 42, entgegengesetzt zur Z-Richtung durch die Abstützfläche 44 des Pratzenunterteils 41 und entgegengesetzt zur Y-Richtung durch die Stirnfläche 46 am Pratzenunterteil 41 begrenzt.

An einer Außenseite am Pratzenunterteil 41 ist zumindest ein Fluidanschluss 51 vorgesehen, durch welchen zumindest ein Fluidstrahl 84, 85 einer Reinigungseinrichtung 52 zuführbar ist, die im U-förmigen Gehäuse 47 bzw. im Pratzenunterteil 41 vorgesehen ist.

Die Reinigungseinrichtung 52 ist bevorzugt einen Druckerzeuger 54 anschließbar, der durch eine Steuerung 55 der Bearbeitungsmaschine 11 ansteuerbar ist. Der Druckerzeuger 54 wird bevorzugt mit einer Fluidversorgung 56 der Bearbeitungsmaschine 11 versorgt. Alternativ kann auch ein Anschluss an ein externes Druckversorgungssystem erfolgen. Der Druckerzeuger 54 führt über zumindest eine Schlauchleitung den zumindest einen Fluidstrahl 84, 85 dem zumindest einen Fluidanschluss 51 zu.

Über Befestigungsmittel 78 ist die Spannpratze 18, 19 lösbar mit der Halteeinrichtung 17 verbunden.

In Figur 3 ist eine perspektivische Ansicht der Spannpratze 18, 19 in einer geschlossenen Position oder Spannposition dargestellt. In dieser geschlossenen Position wird das Werkstück 34 zwischen dem Pratzenoberteil 42 und dem Pratzenunterteil 41 geklemmt oder gespannt gehalten. Bei einer lagerichtigen Anordnung des Werkstücks 34 liegt dieses mit seiner Stirnseite an den Stirnflächen 46 des Pratzenunterteils 41 an. Diese lagerichtige Position wird durch das Tastelement 49 erfasst, indem dieses in eine Erfassungsposition 76 übergeführt wird. Das Tastelement 49 kann mit seiner Tastfläche 50 bündig zur Stirnfläche 46 des Pratzenunterteils 41 übergeführt werden. Diese Positionierung des Tastelementes kann die Erfassungsposition 76 bilden. Dadurch kann die lagerichtige Position des Werkstücks 34 zur Spannpratze 18, 19 erfasst werden.

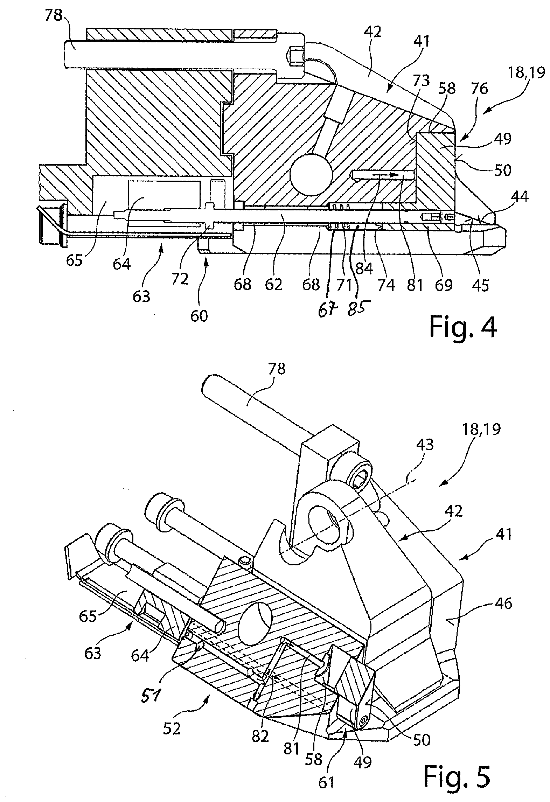

In Figur 4 ist eine schematische Schnittansicht des Pratzenunterteils 41 dargestellt. Im Pratzenunterteil 41 bzw. in einem Schenkel des U-förmigen Gehäuses 47 ist ein Aufnahmeraum 58 vorgesehen. Dieser Aufnahmeraum 58 ist zur Stirnfläche 46 offen ausgebildet. In dem Aufnahmeraum 58 ist das Tastelement 49 vorzugsweise vollständig aufgenommen. In Figur 2 ist das Tastelement 49 in der Ausgangsposition 61 fast vollständig gegenüber dem Aufnahmeraum 58 ausgefahren.

Das Tastelement 49 ist über eine Schubstange 62 mit einem Sensor 63 gekoppelt. Dieser Sensor 63 umfasst ein Sensorelement 64, welches an der Schubstange 62 befestigt ist. Das weitere Sensorelement des Sensors 63 ist fest an dem Pratzenunterteil 41 an einem Sensorarm 65 angrenzend oder in dem Sensorraum 65 vorgesehen. Das an der Schub-stange 62 befestigte Sensorelement 64 ist in einen Sensorarm 65 verschiebbar angeordnet. Dieser Sensorraum 65 ist gegenüber der Umgebung abgeschlossen. Über das Sensorelement 64 wird die jeweilige Position des Tastelementes 49 erfasst und an die Steuerung 55 weitergeleitet.

Die Schubstange 62 ist in einem Führungsschnitt 67 aufgenommen. Bevorzugt sind zumindest zwei Lager 68 vorgesehen, durch welche die Schubstange 62 längs verschiebbar geführt ist. In dem Führungsabschnitt 67 befindet sich ein Zylinderabschnitt 69 des Tastelementes 49. Zwischen dem Zylinderabschnitt 69 des Tastelementes 49 und dem Führungsabschnitt 67 ist ein Rückstellelement 71 angeordnet. Dieses Rückstellelement 71 ist bevorzugt als Druckfeder oder dergleichen ausgerichtet, durch welches das Tastelement 49 in die Ausgangsposition 61 gemäß Figur 2 übergeführt ist. Die Ausgangsposition 61 des Tastelementes 49 im Aufnahmeraum 48 wird beispielsweise durch einen Anschlag 72 begrenzt. Dieser Anschlag 72 ist bevorzugt an der Schubstange vorgesehen. Alternativ kann auch das Sensorelement 64 die Ausgangsposition 61 bestimmen. Ebenso alternativ kann der Zylinderabschnitt 69 dafür ausgebildet sein.

Das Pratzenunterteil 41 ist mit dem in der Ausgangsposition 61 vorgesehenen Tastelement 49 bereit zur manuellen oder automatischen Bestückung mit dem Werkstück 34, um dieses Werkstück 34 zwischen dem Pratzenoberteil 42 und Pratzenunterteil 41 zu greifen. Beim Zuführen des Werkstücks 34 liegt eine Stirnfläche des plattenförmigen Werkstücks 34 an der Tastfläche 50 des Tastelementes 49 an und bewegt das Tastelement 49 in den Aufnahmeraum 58. Sofern das plattenförmige Werkstück 34 mit seiner Stirnseite an den Stirnflächen 46 des Pratzenunterteils 41 anliegt, ist eine lagerichtige Positionierung gegeben. Das Tastelement 49 ist in die Erfassungsposition 76 (Figuren 3 und 4) übergeführt. In diese Erfassungsposition 76 taucht das Tastelement 49 vollständig in den Aufnahmeraum 58 ein. Die Tastfläche 50 des Tastelementes 49 ist bündig zur Stirnfläche 46. Darauffolgend wird durch das Sensorelement 64 die Erfassungsposition 76 erfasst und an die Steuerung 55 der Bearbeitungsmaschine 11 weitergegeben, um darauffolgend die Spannpratze 18, 19 zum Klemmen des Werkstücks 34 anzusteuern.

Nach dem Bearbeiten des Werkstücks 34 kann die Spannpratze 18, 19 gelöst und das Werkstück 34 abtransportiert werden. Zu diesem Zeitpunkt bewirkt das Rückstellelement 71, dass das Tastelement 49 in die Ausgangsposition 61 gemäß Figur 2 übergeführt wird.

Während der Bearbeitung des Werkstücks 34 mittels eines Laserstrahls können sich Verunreinigungen, wie beispielsweise Schmauch, Schlacke, Staub oder dergleichen, an dem Tastelement 49 und/oder in einem Zwischenraum bzw. Spalt zwischen dem Tastelement 49 und dem Aufnahmeraum 58 festsetzen. Die Rückstellkraft des Rückstellelementes 71 kann nicht mehr ausreichen, um das Tastelement 49 in die Ausgangsposition 61 überzuführen.

Zur Wiederherstellung der Funktion des Tastelementes 49 ist eine Reinigungseinrichtung 52 vorgesehen. Diese Reinigungseinrichtung 52 umfasst zumindest einen Fluidanschluss 51 an dem Pratzenunterteil 41. Zwischen dem Fluidanschluss 51 und dem Aufnahmeraum 58 ist zumindest ein Verbindungskanal 81, 82 vorgesehen. Ein dem Fluidanschluss 51 zugeführter Fluidstrahl 84, 85 kann durch den zumindest einen Verbindungskanal 81, 82 auf das Tastelement 49 einwirkend zugeführt werden. Zwischen dem Fluidanschluss 51 und dem Aufnahmeraum 58 verläuft im Gehäuse 47 des Pratzenunterteils 41 der Verbindungskanal 81. An den Verbindungskanal 81 angrenzend oder in einem Abzweig dazu kann ein weiterer Verbindungskanal 82 vorgesehen sein, der in den Führungsabschnitt 67 mündet.

Zur Beaufschlagung des Tastelementes 49 mit dem zumindest einen Fluidstrahl 84, 85 für einen Reinigungsvorgang und/oder Lösevorgang ist bevorzugt eine Fluidversorgung 56 vorgesehen. Dies kann beispielsweise ein Druckluftspeicher sein. Alternativ kann eine externe Druckversorgung vorgesehen sein. Durch die Steuerung 45 wird bevorzugt die Fluidversorgung 56 und der Druckerzeuger 54 angesteuert, um zumindest einen Fluidstrahl 84, 85 auszugeben und über den zumindest einen Fluidanschluss 51 dem Pratzenunterteil 41 zuzuführen.

Über den Verbindungskanal 81 wird ein erster Fluidstrahl 84 in den Aufnahmeraum 58 gerichtet. Durch den Verbindungskanal 82 wird ein zweiter Fluidstrahl 85 in den Zuführabschnitt 67 geführt. Beide Fluidstrahle 84, 85 wirken auf eine Rückseite des Tastelementes 49 bzw. in Ausfahrrichtung des Tastelementes 49 in die Ausgangsposition 61.

Die Verbindungskanäle 81, 82 sind bevorzugt in Ausfahrrichtung des Tastelementes 49 im Pratzenunterteil 41 ausgerichtet. Dadurch wird bei einem Festsetzen des Tastelementes 49 in dem Aufnahmeraum 58 bewirkt, dass der zumindest eine auf das Tastelement 49 wirkende Fluidstrahl 84, 85 in Ausfahrrichtung des Tastelements 49 wirkt und somit eine erhöhte Kraftwirkung erzielt. Für einen Löseprozess des Tastelementes 49 zum Überführen aus einer Erfassungsposition 46 in die Ausgangsposition 61 wird der zumindest eine Fluidstrahl 84, 85 durch den Druckerzeuger 54 beaufschlagt. Bevorzugt werden durch den Druckerzeuger 54 zusätzlich Druckstöße erzeugt. Diese Druckstöße können in kurzen Zeitabständen aufeinanderfolgend, beispielsweise kleiner als 1 Sekunde, ausgegeben werden, um den Löseeffekt zu bewirken. Auch kann in einem oder mehreren aufeinanderfolgenden Zeitintervallen der zumindest eine Fluidstrahl 84, 85 mit Druckstößen ausgegeben werden. Alternativ kann in einem vorbestimmten Zeitintervall der zumindest eine Fluidstrahl 84, 85 mit einem konstanten oder zunehmenden Druck ausgegeben werden und im darauffolgenden Zeitintervall der zumindest eine Fluidstrahl 84, 85 mit einem oder mehreren Druckstößen überlagert werden. Diese Varianten können während eines Reinigungszyklus angesteuert werden. Während oder nach dem Lösen der Verunreinigungen wird das Tastelement 49 in die Ausgangsposition 61 übergeführt und gleichzeitig ggf. noch verbleibende Verunreinigungen in den Aufnahmeraum 58 und/oder in einen Spalt zwischen dem Tastelement 49 und dem Aufnahmeraum 58 aus dem Aufnahmeraum 58 ausgeblasen.

## Patentansprüche

1. Spannpratze zur Fixierung eines plattenförmigen Materials, insbesondere Blech, für eine Bearbeitungsmaschine (11)
- mit einem Pratzenunterteil (41) und einem Pratzenoberteil (42), das oder die in eine Spannposition zur Klemmung des plattenförmigen Materials (34) überführbar sind,
- mit einer an dem Pratzenunterteil (41) vorgesehenen Abstützfläche (44) zur Auflage des plattenförmigen Materials (34) und einer zur Abstützfläche (44) ausgerichteten Stirnfläche (46), welche zur Anlage einer Stirnseite des plattenförmigen Materials (34) dient,
- mit einer an dem Pratzenoberteil (42) vorgesehenen Spannfläche (45), die zur Abstützfläche (44) ausgerichtet ist,
- mit einer in dem Pratzenunterteil (41) angeordneten Sensoreinrichtung (60), welche ein Tastelement (49) und ein mit dem Tastelement (49) verbundenes Sensorelement (64) zur Erkennung einer Ausgangsposition (61) des Tastelementes (49), in welchem das Tastelement (49) gegenüber dem Pratzenunterteil (41) ausgefahren ist und zur Erkennung einer Erfassungsposition (76), in welche das Tastelement (49) zumindest teilweise in das Pratzenunterteil (41) eingefahren ist, umfasst,
**dadurch gekennzeichnet,**
- **dass** eine Reinigungseinrichtung (52) vorgesehen ist, welche auf das Tastelement (49) einwirkt und eine Verfahrbewegung des Tastelements (49) in die Ausgangsposition (61) freisetzt.

2. Spannpratze nach Anspruch 1, **dadurch gekennzeichnet, dass** die Reinigungseinrichtung (52) mit zumindest einem Fluidstrahl (84, 85) im Pratzenunterteil (41) auf das Tastelement (49) zum Überführen des Tastelements (49) in die Ausgangsposition ausgerichtet ist.

3. Spannpratze nach Anspruch 1 oder 2, **dadurch gekennzeichnet, dass** die Reinigungseinrichtung (52) zumindest einen Druckerzeuger (54) umfasst, der an eine Fluidversorgung (55) oder an eine externe Druckversorgung anschließbar ist.

4. Spannpratze nach einem der vorhergehenden Ansprüche, **dadurch gekennzeichnet, dass** die Reinigungseinrichtung (52) zur Ausgabe von Druckstößen mit einer Steuerung (55) ansteuerbar ist.

5. Spannpratze nach einem der vorhergehenden Ansprüche, **dadurch gekennzeichnet, dass** das Tastelement (49) in einer Ausgangsposition (61) gegenüber der Stirnfläche (46) des Pratzenunterteils (41) hervorsteht und in einer Erfassungsposition (76) zumindest teilweise in einen an die Stirnfläche (46) angrenzenden und in dem Pratzenunterteil (41) vorgesehenen Aufnahmeraum (58) eintaucht und der zumindest eine Fluidstrahl (84, 85) in den Aufnahmeraum (58) strömt.

6. Spannpratze nach Anspruch 5, **dadurch gekennzeichnet, dass** das Tastelement (49) und das Sensorelement (64) durch eine Schubstange (62) gekoppelt sind, wobei die Schubstange (62) sich in einem Führungsabschnitt (67) des Pratzenunterteils (41) zwischen einem Sensoraufnahmeraum (65) und dem Aufnahmeraum (58) erstreckt und vorzugsweise in dem Führungsabschnitt (67) ein Rückstellelement (71) vorgesehen ist, durch welches das Tastelement (49) in die Ausgangsposition (61) überführbar ist.

7. Spannpratze nach Anspruch 5 oder 6, **dadurch gekennzeichnet, dass** das Tastelement (49) eine Tastfläche (50) mit einer länglichen Geometrie, insbesondere eine länglich-rechteckförmigen oder einer länglich-ovalen Geometrie, aufweist und in dem korrespondierenden Aufnahmeraum (58) positioniert ist und dass sich das Tastelement (49) innerhalb der vertikal ausgerichteten Stirnfläche (46) des Pratzenunterteils (41) erstreckt.

8. Spannpratze nach Anspruch 7, **dadurch gekennzeichnet, dass** das Tastelement (49) rückseitig zur Tastfläche (50) eine erste Druckfläche (73) und an einem Zylinderabschnitt (69) des Tastelementes (49) im Führungsabschnitt (67) eine zweite Druckfläche (74) aufweist.

9. Spannpratze nach einem der Ansprüche 5 bis 8, **dadurch gekennzeichnet, dass** der Aufnahmeraum (58) zur Stirnseite des Pratzenunterteils (41) offen ausgebildet ist und in Richtung auf den Sensorraum (65), in welchem sich die Schubstange (62) erstreckt, durch ein Lager (68) und/oder eine Dichtung abgedichtet ist.

10. Spannpratze nach einem der Ansprüche 2 bis 9, **dadurch gekennzeichnet, dass** ein zweiter Fluidstrahl (85) durch einen Verbindungskanal (81) auf die zweite Druckfläche (74) des Zylinderabschnitts (69) und ein erster Fluidstrahl (84) durch einen Verbindungskanal (82) auf die erste Druckfläche (73) des Tastelementes (49) gerichtet ist.

11. Spannpratze nach einem der vorhergehenden Ansprüche, **dadurch gekennzeichnet, dass** die Reinigungseinrichtung (52) einen an dem Pratzenunterteil (41) angeordneten Fluidanschluss (51) aufweist, welcher über zumindest einen Verbindungskanal (81, 82) im Pratzenunterteil (41) in den Aufnahmeraum (58) und/oder Zylinderabschnitt (69) mündet.

12. Bearbeitungsmaschine zum Bearbeiten von plattenförmigen Werkstücken (34), insbesondere Blechen,
- mit einer Werkstückauflage (16), welche eine erste und eine zweite Werkstückauflagefläche (22, 23) aufweist,
- mit einer Halteeinrichtung (17), welche mehrere Spannpratzen (18, 19) umfasst, die das zumindest eine plattenförmige Werkstück (34) greifen und durch welche das plattenförmige Werkstück (34) relativ zur ersten und zweiten Werkstückauflagefläche (22, 23) verfahrbar ist,
- mit einer Strahlauffangvorrichtung (24), die zwischen der ersten und zweiten Werkstückauflagefläche (22, 23) vorgesehen ist und sich mit einer Öffnung (25) zwischen der ersten und zweiten Werkstückauflagefläche (22, 23) zumindest teilweise erstreckt,
- mit einer Laserbearbeitungseinrichtung (15), welche einen Laserschneidkopf (20) aufweist, der oberhalb der Öffnung (25) der Strahlauffangvorrichtung (24) verfahrbar ist,
**dadurch gekennzeichnet,**
- **dass** die Spannpratzen (18, 19) der Halteeinrichtung (17) nach einem der Ansprüche 1 bis 11 ausgebildet sind.

13. Bearbeitungsmaschine nach Anspruch 12, **dadurch gekennzeichnet, dass** die Reinigungseinrichtung (52) zumindest einen Druckerzeuger (54) aufweist, durch welchen der zumindest eine Fluidstrahl (84, 85) dem Fluidanschluss (51) an dem Pratzenunterteil (41) zuführbar ist und das Tastelement (49) mit dem zumindest einen Fluidstrahl (84, 85) beaufschlagbar ist.

14. Verfahren zur Reinigung einer Spannpratze (18, 19) für eine Bearbeitungsmaschine (11),
- bei der zur Fixierung eines plattenförmigen Werkstücks (34), insbesondere Blech, ein Pratzenunterteil (41) und/oder ein Pratzenoberteil (42) in eine Spannposition zur Klemmung des plattenförmigen Materials (34) übergeführt wird,
- wobei eine an dem Pratzenunterteil (41) vorgesehene Abstützfläche (44) zur Auflage des plattenförmigen Materials (34) und eine zur Abstützfläche (44) ausgerichtete Stirnfläche (46) am Pratzenunterteil (41) zur Anlage einer Stirnseite des plattenförmigen Werkstücks (34) vorgesehen und eine an dem Pratzenoberteil (42) vorgesehene Spannfläche (45) zur Abstützfläche (44) ausgerichtet ist, und
- wobei eine in dem Pratzenunterteil (41) angeordnete Sensoreinrichtung (60) ein Tastelement (49) und ein mit dem Tastelement (49) verbundenes Sensorelement (64) umfasst, durch welches eine Ausgangsposition (61) des Tastelementes (49), in welcher das Tastelement (49) gegenüber dem Pratzenunterteil (41) ausgefahren ist und eine Erfassungsposition (76), in welcher das Tastelement (49) zumindest teilweise in das Pratzenunterteil (41) eingefahren ist, erfasst wird,
**dadurch gekennzeichnet,**
- **dass** eine Reinigungseinrichtung (52) betätigt wird, welche auf das Tastelement (49) einwirkt und durch welche eine Verfahrbewegung des Tastelements (49) in die Ausgangsposition (61) freigesetzt wird.

15. Verfahren nach Anspruch 14, **dadurch gekennzeichnet, dass** das Tastelement (49) durch die Reinigungsvorrichtung (52) mit zumindest einem Fluidstrahl (84, 85) beaufschlagt wird.

16. Verfahren nach Anspruch 14 oder 15, **dadurch gekennzeichnet, dass** die Reinigungseinrichtung (52) zumindest einen Druckerzeuger (54) umfasst, der an eine Fluidversorgung (55) oder eine externe Druckversorgung angeschlossen wird.

17. Verfahren nach Anspruch 16, **dadurch gekennzeichnet, dass** der Druckerzeuger (54) mit einer Steuerung (55) der Bearbeitungsmaschine (11) zur Ausgabe des zumindest einen Fluidstrahls (84, 85) mit Druckstößen angesteuert wird und vorzugsweise der zumindest eine Fluidstrahl (84, 85) zumindest in vorbestimmten Zeitintervallen mit mehreren Druckstößen beaufschlagt wird.

18. Verfahren nach einem der Ansprüche 15 bis 17, **dadurch gekennzeichnet, dass** der zumindest eine Fluidstrahl (84, 85) einem Aufnahmeraum (58) in dem Pratzenunterteil (41) zugeführt wird, durch welchen das Tastelement (49) in die Ausgangsposition (61) übergeführt wird und zwischen dem Tastelement (49) und dem Aufnahmeraum (58) sich befindliche Verunreinigungen durch den zumindest einen Fluidstrahl (84, 85) aus dem Aufnahmeraum (58) herausgeführt werden.

19. Verfahren nach Anspruch 18, **dadurch gekennzeichnet, dass** der zumindest eine Fluidstrahl (84, 85) als Gasstrahl oder Druckluftstrahl ausgegeben wird.

## Claims

1. Clamping claw for fixing a plate-shaped material, in particular sheet metal, for a processing machine (11)
- with a lower clamp part (41) and an upper clamp part (42), which can be transferred into a clamping position for clamping the plate-shaped material (34),
- with a support surface (44) provided on the lower claw part (41) for supporting the plate-shaped material (34) and an end surface (46) aligned with the support surface (44), which serves to bear against an end face of the plate-shaped material (34),
- with a clamping surface (45) provided on the upper claw part (42), which is aligned with the support surface (44),
- with a sensor device (60) which is arranged in the lower claw part (41) and comprises a touch element (49) and a sensor element (64) connected to the touch element (49) for detecting an initial position (61) of the touch element (49), in which the touch element (49) is extended relative to the lower claw part (41), and for detecting a detection position (76), into which the touch element (49) is at least partially retracted into the lower claw part (41),
**characterized in**
- **in that** a cleaning device (52) is provided which acts on the touch element (49) and releases a movement of the touch element (49) into the starting position (61).

2. Clamping claw according to claim 1, **characterized in that** the cleaning device (52) is aligned with at least one fluid jet (84, 85) in the claw lower part (41) on the button element (49) for transferring the button element (49) into the starting position.

3. Clamping claw according to claim 1 or 2, **characterized in that** the cleaning device (52) comprises at least one pressure generator (54) which is connectable to a fluid supply (55) or to an external pressure supply.

4. Clamping claw according to one of the preceding claims, **characterized in that** the cleaning device (52) is controllable by a control unit (55) to output pressure surges.

5. Clamping claw according to one of the preceding claims, **characterized in that** the touch element (49) protrudes in an initial position (61) relative to the end face (46) of the lower claw part (41) and, in a detection position (76), dips at least partially into a receiving space (58) adjacent to the end face (46) and provided in the lower claw part (41), and the at least one fluid jet (84, 85) flows into the receiving space (58).

6. Clamping claw according to claim 5, **characterized in that** the touch element (49) and the sensor element (64) are coupled by a push rod (62), the push rod (62) extending in a guide section (67) of the lower claw part (41) between a sensor receiving space (65) and the receiving space (58), and preferably a resetting element (71) being provided in the guide section (67), by means of which resetting element the touch element (49) moveable into the starting position (61).

7. Clamping claw according to claim 5 or 6, **characterized in that** the touch element (49) has a touch surface (50) with an elongate geometry, in particular an elongate-rectangular or an elongate-oval geometry, and is positioned in the corresponding receiving space (58), and **in that** the touch element (49) extends within the vertically aligned end face (46) of the lower claw part (41).

8. Clamping claw according to claim 7, **characterized in that** the touch element (49) has a first pressure surface (73) on the rear side of the touch surface (50) and a second pressure surface (74) on a cylinder section (69) of the touch element (49) in the guide section (67).

9. Clamping claw according to one of claims 5 to 8, **characterized in that** the receiving space (58) is designed to be open towards the end face of the lower claw part (41) and is sealed in the direction of the sensor space (65), in which the push rod (62) extends, by a bearing (68) and/or a seal.

10. Clamping claw according to one of claims 2 to 9, **characterized in that** a second fluid jet (85) is directed through a connecting channel (81) onto the second pressure surface (74) of the cylinder section (69) and a first fluid jet (84) is directed through a connecting channel (82) onto the first pressure surface (73) of the touch element (49).

11. Clamping claw according to one of the preceding claims, **characterized in that** the cleaning device (52) has a fluid connection (51) which is arranged on the lower claw part (41) and which opens into the receiving space (58) and/or cylinder section (69) via at least one connecting channel (81, 82) in the lower claw part (41).

12. Processing machine for processing plate-shaped workpieces (34), in particular sheet metal,
- with a workpiece support (16), which has a first and a second workpiece support surface (22, 23),
- with a holding device (17) which comprises a plurality of clamping claws (18, 19) which grip the at least one plate-shaped workpiece (34) and by means of which the plate-shaped workpiece (34) is moveable relative to the first and second workpiece support surface (22, 23),
- with a beam catching device (24), which is provided between the first and second workpiece support surfaces (22, 23) and extends at least partially with an opening (25) between the first and second workpiece support surfaces (22, 23),
- with a laser processing device (15) which has a laser cutting head (20) which is moveable above the opening (25) of the beam receiving device (24),
**characterized in**
- **in that** the clamping claws (18, 19) of the holding device (17) are designed according to one of claims 1 to 11.

13. Processing machine according to claim 12, **characterized in that** a cleaning device (52) is provided, which has at least one pressure generator (54), by means of which the at least one fluid jet (84, 85) is feddable to the fluid connection (51) on the lower part (41) of the clamp and the at least one fluid jet (84, 85) is applyable to the touch element (49).

14. Method for cleaning a clamping claw (18, 19) for a processing machine (11),
- in which, for fixing a plate-shaped workpiece (34), in particular sheet metal, a lower claw part (41) and/or an upper claw part (42) is moved into a clamping position for clamping the plate-shaped material (34),
- wherein a support surface (44) provided on the lower clamp part (41) for supporting the plate-shaped material (34) and an end surface (46) aligned with the support surface (44) are provided on the lower clamp part (41) for bearing against an end face of the plate-shaped workpiece (34) and a clamping surface (45) provided on the upper clamp part (42) is aligned with the support surface (44), and
- wherein a sensor device (60) arranged in the lower claw part (41) comprises a touch element (49) and a sensor element (64) which is connected to the touch element (49) and by means of which an initial position (61) of the touch element (49), in which the touch element (49) is extended relative to the lower claw part (41), and a detection position (76), in which the touch element (49) is at least partially retracted into the lower claw part (41), are detected,
**characterized in**
- **in that** a cleaning device (52) is actuated, which acts on the touch element (49) and by means of which a movement of the touch element (49) into the starting position (61) is released.

15. Method according to claim 14, **characterized in that** the touch element (49) is acted upon by the cleaning device (52) with at least one fluid jet (84, 85).

16. Method according to claim 14 or 15, **characterized in that** the cleaning device (52) comprises at least one pressure generator (54) which is connected to a fluid supply (55) or an external pressure supply.

17. Method according to claim 16, **characterized in that** the pressure generator (54) is actuated with a control (55) of the processing machine (11) for outputting the at least one fluid jet (84, 85) with pressure surges and preferably the at least one fluid jet (84, 85) is subjected to a plurality of pressure surges at least at predetermined time intervals.

18. Method according to one of claims 15 to 17, **characterized in that** the at least one fluid jet (84, 85) is fed to a receiving space (58) in the lower claw part (41), by means of which the touch element (49) is transferred to the starting position (61) and impurities located between the touch element (49) and the receiving space (58) are guided out of the receiving space (58) by the at least one fluid jet (84, 85).

19. Method according to claim 18, **characterized in that** the at least one fluid jet (84, 85) is emitted as a gas jet or compressed air jet.

## Revendications

1. Griffe de serrage pour la fixation d'un matériau en forme de plaque, en particulier de la tôle, pour une machine d'usinage (11).
- avec une partie inférieure de griffe (41) et une partie supérieure de griffe (42), qui peuvent être amenées dans une position de serrage pour serrer le matériau en forme de plaque (34),
- avec une surface d'appui (44) prévue sur la partie inférieure de la griffe (41) pour l'appui du matériau en forme de plaque (34) et une surface frontale (46) orientée vers la surface d'appui (44), qui sert à l'appui d'une face frontale du matériau en forme de plaque (34),
- avec une surface de serrage (45) prévue sur la partie supérieure de la griffe (42), qui est orientée vers la surface d'appui (44),
- avec un dispositif de détection (60) disposé dans la partie inférieure de la griffe (41), qui comprend un élément de touche (49) et un élément de détection (64) relié à l'élément de touche (49) pour la reconnaissance d'une position initiale (61) de l'élément de touche (49), dans laquelle l'élément de touche (49) est sorti par rapport à la partie inférieure de la griffe (41) et pour la reconnaissance d'une position de détection (76), dans laquelle l'élément de touche (49) est rentré au moins partiellement dans la partie inférieure de la griffe (41),
**caractérisé en ce que**
- qu'il est prévu un dispositif de nettoyage (52) qui agit sur l'élément de touche (49) et libère un mouvement de déplacement de l'élément de touche (49) vers la position de départ (61).

2. Griffe de serrage selon la revendication 1, **caractérisée en ce que** le dispositif de nettoyage (52) est orienté avec au moins un jet de fluide (84, 85) dans la partie inférieure de la griffe (41) sur l'élément touche (49) pour le transfert de l'élément touche (49) dans la position de départ.

3. Griffe de serrage selon la revendication 1 ou 2, **caractérisée en ce que** le dispositif de nettoyage (52) comprend au moins un générateur de pression (54) qui peut être raccordé à une alimentation en fluide (55) ou à une alimentation en pression externe.

4. Griffe de serrage selon l'une des revendications précédentes, **caractérisée en ce que** le dispositif de nettoyage (52) peut être piloté par une commande (55) pour délivrer des coups de bélier.

5. Griffe de serrage selon l'une des revendications précédentes, **caractérisée en ce que**, dans une position initiale (61), l'élément touche (49) fait saillie par rapport à la face frontale (46) de la partie inférieure de la griffe (41) et, dans une position de détection (76), plonge au moins partiellement dans un espace de réception (58) adjacent à la face frontale (46) et prévu dans la partie inférieure de la griffe (41), et le au moins un jet de fluide (84, 85) s'écoule dans l'espace de réception (58).

6. Griffe de serrage selon la revendication 5, **caractérisée en ce que** l'élément touche (49) et l'élément détection (64) sont couplés par une tige de poussée (62), la tige de poussée (62) s'étendant dans une section de guidage (67) de la partie inférieure de griffe (41) entre un espace de réception de capteur (65) et l'espace de réception (58), et de préférence un élément de rappel (71) est prévu dans la section de guidage (67), grâce auquel l'élément touche (49) peut être amené dans la position initiale (61).

7. Griffe de serrage selon la revendication 5 ou 6, **caractérisée en ce que** l'élément de touche (49) présente une surface de touche (50) avec une géométrie allongée, en particulier une géométrie rectangulaire allongée ou une géométrie ovale allongée, et est positionné dans l'espace de réception correspondant (58), et **en ce que** l'élément de touche (49) s'étend à l'intérieur de la surface frontale (46) orientée verticalement de la partie inférieure de la griffe (41).

8. Griffe de serrage selon la revendication 7, **caractérisée en ce que** l'élément de touche (49) présente une première surface de pression (73) à l'arrière de la surface de touche (50) et une deuxième surface de pression (74) sur une section cylindrique (69) de l'élément de touche (49) dans la section de guidage (67).

9. Griffe de serrage selon l'une des revendications 5 à 8, **caractérisée en ce que** l'espace de réception (58) est réalisé ouvert vers la face frontale de la partie inférieure de la griffe (41) et est étanchéifié par un palier (68) et/ou un joint d'étanchéité en direction de l'espace de détection (65) dans lequel s'étend la tige de poussée (62).

10. Griffe de serrage selon l'une quelconque des revendications 2 à 9, **caractérisée en ce qu'**un deuxième jet de fluide (85) est dirigé vers la deuxième surface de pression (74) de la portion de cylindre (69) à travers un canal de communication (81) et un premier jet de fluide (84) est dirigé vers la première surface de pression (73) de l'élément touche (49) à travers un canal de communication (82).

11. Griffe de serrage selon l'une quelconque des revendications précédentes, **caractérisée en ce que** le dispositif de nettoyage (52) comporte un raccord de fluide (51) disposé sur la partie inférieure (41) de la griffe (41), qui débouche dans l'espace de réception (58) et/ou la section de cylindre (69) par l'intermédiaire d'au moins un canal de liaison (81, 82) dans la partie inférieure de la griffe (41).

12. Machine d'usinage pour l'usinage de pièces en forme de plaques (34), en particulier de tôles,
- avec un support de pièce (16), qui présente une première et une deuxième surface de support de pièce (22, 23),
- avec un dispositif de maintien (17) qui comprend plusieurs griffes de serrage (18, 19) qui saisissent l'au moins une pièce en forme de plaque (34) et par lesquelles la pièce en forme de plaque (34) peut être déplacée par rapport à la première et à la deuxième surface d'appui de pièce (22, 23),
- avec un dispositif de réception de faisceau (24) qui est prévu entre la première et la deuxième surface de support de pièce (22, 23) et qui s'étend au moins partiellement avec une ouverture (25) entre la première et la deuxième surface de support de pièce (22, 23),
- avec un dispositif d'usinage au laser (15), qui présente une tête de découpe au laser (20), qui peut être déplacée au-dessus de l'ouverture (25) du dispositif de collecte de faisceau (24),
**caractérisé en ce que**
- que les griffes de serrage (18, 19) du dispositif de maintien (17) sont réalisées selon l'une des revendications 1 à 11.

13. Machine d'usinage selon la revendication 12, **caractérisée en ce qu'**il est prévu un dispositif de nettoyage (52) qui présente au moins un générateur de pression (54) par lequel le au moins un jet de fluide (84, 85) peut être amené à un raccord de fluide (51) sur la partie inférieure de la griffe (41) et l'élément de touche (49) peut être sollicité par le au moins un jet de fluide (84, 85).

14. Procédé de nettoyage d'une griffe de serrage (18, 19) pour une machine d'usinage (11),
- dans lequel, pour fixer une pièce à usiner en forme de plaque (34), en particulier une tôle, une partie inférieure de griffe (41) et/ou une partie supérieure de griffe (42) est transférée dans une position de serrage pour serrer le matériau en forme de plaque (34),
- une surface d'appui (44) prévue sur la partie inférieure de la griffe (41) pour l'appui du matériau en forme de plaque (34) et une surface frontale (46) orientée vers la surface d'appui (44) sur la partie inférieure de la griffe (41) pour l'appui d'une face frontale de la pièce en forme de plaque (34) étant prévues et une surface de serrage (45) prévue sur la partie supérieure de la griffe (42) étant orientée vers la surface d'appui (44), et
- un dispositif de détection (60) disposé dans la partie inférieure de la griffe (41) comprenant un élément de touche (49) et un élément de détection (64) relié à l'élément de touche (49), par lequel une position de départ (61) de l'élément de touche (49), dans laquelle l'élément de touche (49) est sorti par rapport à la partie inférieure de la griffe (41), et une position de détection (76), dans laquelle l'élément de touche (49) est rentré au moins partiellement dans la partie inférieure de la griffe (41), sont détectées,
**caractérisé en ce que**
- on actionne un dispositif de nettoyage (52) qui agit sur l'élément de touche (49) et qui permet de libérer un mouvement de déplacement de l'élément de touche (49) vers la position initiale (61).

15. Procédé selon la revendication 14, **caractérisé en ce que** l'élément touche (49) est soumis à au moins un jet de fluide (84, 85) par le dispositif de nettoyage (52).

16. Procédé selon la revendication 14 ou 15, **caractérisé en ce que** le dispositif de nettoyage (52) comprend au moins un générateur de pression (54) raccordé à une alimentation en fluide (55) ou à une alimentation en pression externe.

17. Procédé selon la revendication 16, **caractérisé en ce que** le générateur de pression (54) est piloté par une commande (55) de la machine d'usinage (11) pour délivrer ledit au moins un jet de fluide (84, 85) avec des coups de pression et, de préférence, ledit au moins un jet de fluide (84, 85) est soumis à plusieurs coups de pression au moins à des intervalles de temps prédéterminés.

18. Procédé selon l'une des revendications 15 à 17, **caractérisé en ce que** le au moins un jet de fluide (84, 85) est amené à un espace de réception (58) dans la partie inférieure de la griffe (41), par lequel l'élément de touche (49) est amené dans la position initiale (61) et les impuretés se trouvant entre l'élément de touche (49) et l'espace de réception (58) sont évacuées de l'espace de réception (58) par le au moins un jet de fluide (84, 85) .

19. Procédé selon la revendication 18, **caractérisé en ce que** ledit au moins un jet de fluide (84, 85) est émis sous forme de jet de gaz ou de jet d'air comprimé.
